# EUROPEAN PATENT APPLICATION

(11) **EP 3 122 132 A1**
(43) Date of publication of application: **25.01.2017**
(21) Application number: 15765042.5
(22) Date of filing: 18.03.2015
(51) Int. Cl.: H04W 72/04, H04W 8/00, H04W 76/02

(54) **BASE STATION, USER EQUIPMENT, TRANSMISSION TIMING INFORMATION TRANSMITTING METHOD, AND DISCOVERY SIGNAL TRANSMITTING METHOD**

(30) Priority: 20.03.2014 JP 2014059263
(71) Applicant: NTT DOCOMO, INC., Chiyoda-ku Tokyo 100-6150 (JP)
(72) Inventor: YASUKAWA, Shimpei, Tokyo 100-6150 (JP); HARADA, Hiroki, Tokyo 100-6150 (JP); ZENG, Yongbo, Beijing 100190 (CN); ZHAO, Qun, Beijing 100190 (CN); ZHANG, Yongsheng, Beijing 100190 (CN)
(74) Representative: Hoffmann Eitle
(86) International application number: PCT/JP2015/057995
(87) International publication number: WO 2015/141709

(57) **Abstract**

A base station configured to transmit a control signal to a user apparatus that performs transmission of a discovery signal by radio, including: resource assignment means configured to assign, to the user apparatus, a discovery resource to be used for performing transmission of a discovery signal; determination means configured to determine transmission timing information to be used for the user apparatus to transmit a discovery signal based on an assignment method of the discovery resource; and transmission means configured to transmit the transmission timing information to the user apparatus.

## Description

### TECHNICAL FIELD

The present invention relates to terminal-to-terminal communication (D2D communication, device-to-device communication). More particularly, the present invention relates to a method for setting a transmission timing for transmitting a discovery signal in terminal-to-terminal communication.

### BACKGROUND ART

In mobile communication, it is common that a terminal (to be referred to as "user apparatus UE" hereinafter) and a base station eNB perform communication so that communication is performed between user apparatuses UE. However, in recent years, various techniques are considered for performing direct communication between user apparatuses UE.

When performing communication between user apparatuses UE, it is necessary that a user apparatus UE discovers another neighboring user apparatus UE. As a method for discovering a user apparatus UE, there is a method in which each user apparatus UE transmits (broadcasts) a discovery signal including its own ID.

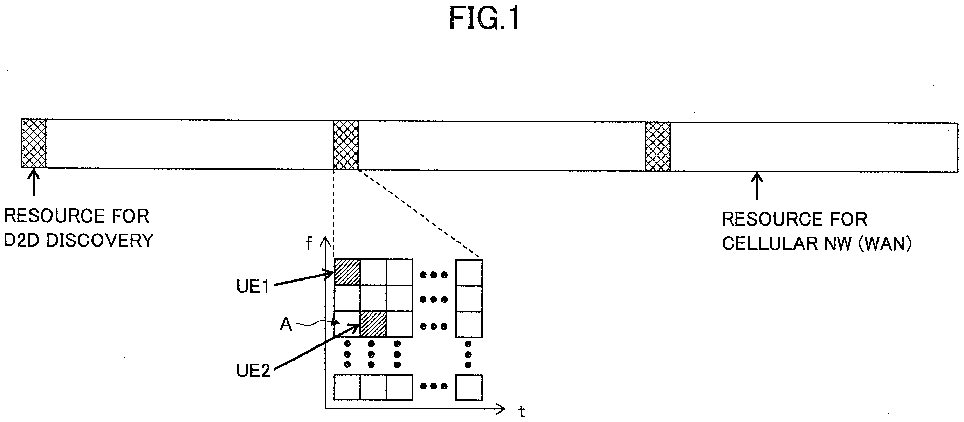

Fig. 1 is a diagram schematically showing an example of a resource (discovery resource) for transmitting a discovery signal. In the example of Fig. 1, it is defined that a discovery period, for performing discovery (and being discovered) of a user apparatus UE by transmitting and receiving a discovery signal, comes periodically. In each discovery period, resources (each being a time-frequency resource, which is to be referred to as "discovery resource", this may be called D2D resource pool) for transmitting (and receiving) a discovery signal are defined. Each user apparatus UE transmits a discovery signal by using a discovery resource in the discovery period. A discovery resource and a cellular communication (to be referred to as WAN, hereinafter) resource are multiplexed. The multiplexing is performed by frequency multiplexing (FDM), time division multiplexing (TDM), combination of TDM and FDM, and the like. Also, it is assumed that the discovery signal is mapped to a time-frequency resource of a data channel such as a PUSCH in LTE, and is transmitted.

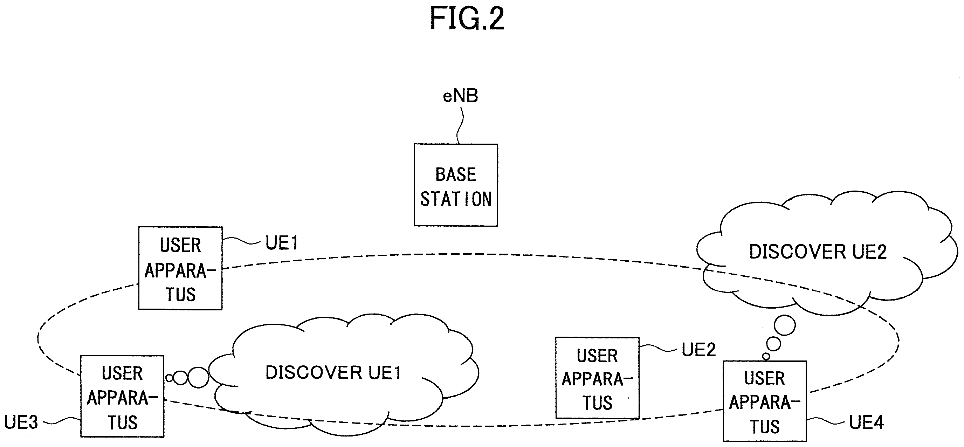

An example of D2D communication is shown in Fig. 2. A user apparatus UE1 of Fig. 2 transmits a discovery signal using a discovery resource indicated by UE1 of Fig. 1, a user apparatus UE2 of Fig. 2 transmits a discovery signal using a discovery resource indicated by UE2 of Fig. 1.

A user apparatus UE3 in Fig. 2 discovers the user apparatus UE1 by receiving a discovery signal transmitted by the user apparatus UE1, and a user apparatus UE4 discovers the user apparatus UE2 by receiving a discovery signal transmitted by the user apparatus UE2.

There are roughly two methods as methods for assigning a discovery resource to each user apparatus UE. One is a method in which, discovery resources are commonly assigned to all user apparatuses UE (or to a group including a plurality of user apparatuses UE), so that each user apparatus UE arbitrarily selects a discovery resource from among usable discovery resources. This method is called "type 1". Another one is a method in which the base station eNB assigns an individual discovery resource to each user apparatuses UE, so that the user apparatus UE transmits a discovery signal using an assigned resource. This method is called "type 2". In the type 2, there are a type 2A for performing dynamic resource assignment for each transmission of a discovery signal, and a type 2B for performing assignment semi-statically.

### RELATED ART DOCUMENT

### [NON PATENT DOCUMENT]

[NON PATENT DOCUMENT 1] 3GPP RP-140126

### SUMMARY OF THE INVENTION

### PROBLEM TO BE SOLVED BY THE INVENTION

A user apparatus UE performing D2D communication periodically receives a synchronization signal from a predetermined apparatus (example: base station eNB) so as to perform transmission and reception of a discovery signal based on a reception timing of this synchronization signal. More specifically, assuming that T1 is a reception timing of the synchronization signal and that T2 is a timing offset (positive, negative, or 0), a discovery signal is transmitted at a timing of T1-T2.

For example, as described in the non-patent document 1, it is being studied to define the value of the T2 based on a state (RRC connected/RRC idle) and the like of the user apparatus UE. For example, it is considered to use 0 or a value of TA (Timing Advance) as a value of T2. TA is a value of transmission timing offset that the base station eNB notifies to each user apparatus UE in order to align timing of uplink signals transmitted to the base station eNB from each user apparatus UE in WAN communication of LTE. In WAN communication of LTE (FDD), the user apparatus UE transmits an uplink signal at a timing of T1-TA.

As mentioned above, a discovery resource and a WAN resource are multiplexed by FDM and/or TDM. In such a case, there is a possibility in that D2D communication exerts interference on uplink communication of WAN. For example, in the case of an FDD system of LTE, T2=TA is used in the uplink of WAN. On the other hand, in discovery signal transmission of D2D, in a case where a value other than TA is used as T2, there is a possibility in that a difference of arriving timing at the base station eNB between a discovery signal (example: signal on a PDSCH) and a WAN signal (example: PUCCH that should be in the same subframe as the PDSCH) becomes large.

When the timing difference between the discovery signal and the WAN signal becomes large, there is a possibility in that the discovery signal exerts inter symbol interference (ISI) and/or inter carrier interference (ICI) between adjacent subcarriers on the WAN signal.

The present invention is contrived in view of the above-mentioned points, and an object of the present invention is to provide a technique that can set a proper transmission timing offset to a user apparatus that performs transmission of a discovery signal.

### MEANS FOR SOLVING THE PROBLEM

According to an embodiment of the present invention, there is provided a base station configured to transmit a control signal to a user apparatus that performs transmission of a discovery signal by radio, including:
resource assignment means configured to assign, to the user apparatus, a discovery resource to be used for performing transmission of a discovery signal;
determination means configured to determine transmission timing information to be used for the user apparatus to transmit a discovery signal based on an assignment method of the discovery resource; and
transmission means configured to transmit the transmission timing information to the user apparatus.

According to an embodiment of the present invention, there is provided a user apparatus configured to perform transmission of a discovery signal by radio, including:
reception means configured to receive, from a base station, a control signal including transmission timing information to be used for the user apparatus to transmit a discovery signal; and
transmission means configured to transmit a discovery signal by using the transmission timing information obtained from the control signal,
wherein the transmission timing information is information determined based on an assignment method of a discovery resource to be used for performing transmission of a discovery signal.

According to an embodiment of the present invention, there is provided a transmission timing information transmission method executed by a base station configured to transmit a control signal to a user apparatus that performs transmission of a discovery signal by radio, including:
a resource assignment step of assigning, to the user apparatus, a discovery resource to be used for performing transmission of a discovery signal;
a determination step of determining transmission timing information to be used for the user apparatus to transmit a discovery signal based on an assignment method of the discovery resource; and
a transmission step of transmitting the transmission timing information to the user apparatus.

According to an embodiment of the present invention, there is provided a discovery signal transmission method executed by a user apparatus configured to perform transmission of a discovery signal by radio, including:
a reception step of receiving, from a base station, a control signal including transmission timing information to be used for the user apparatus to transmit a discovery signal; and
a transmission step of transmitting a discovery signal by using the transmission timing information obtained from the control signal,
wherein the transmission timing information is information determined based on an assignment method of a discovery resource to be used for performing transmission of a discovery signal.

### EFFECT OF THE PRESENT INVENTION

According to an embodiment of the present invention, it becomes possible to set a proper transmission timing offset to a user apparatus that performs transmission of a discovery signal.

### BRIEF DESCRIPTION OF THE DRAWINGS

Fig. 1 is a diagram showing an example of a resource for transmitting a discovery signal;
Fig. 2 is a diagram for explaining D2D communication;
Fig. 3 is a block diagram of a communication system according to an embodiment of the present invention;
Fig. 4 is a diagram for explaining operation outline of a communication system according to an embodiment of the present invention;
Fig. 5 is a diagram showing guard band setting 1;
Fig. 6 is a diagram showing guard band setting 2;
Fig. 7 is a diagram showing a T2 setting example considering a guard band setting and a multiplexing method;
Fig. 8 is a diagram showing a signal arriving timing example in a case of T2=TA;
Fig. 9 is a diagram showing a signal arriving timing example in a case of T2=TA/2;
Fig. 10 is a diagram showing a signal arriving timing example in a case of T2=0;
Fig. 11 is a flowchart showing an operation example of a base station eNB;
Fig. 12 is a flowchart showing an operation example of a user apparatus UE-T;
Fig. 13 is a flowchart showing an operation example of a user apparatus UE-R;
Fig. 14 is a diagram showing a configuration example of a base station eNB;
Fig. 15 is a diagram showing a configuration example of a user apparatus UE.

### EMBODIMENTS FOR CARRYING OUT THE INVENTION

In the following, an embodiment of the present invention is described with reference to figures. The embodiment described below is merely an example, and the embodiment to which the present invention is applied is not limited to the embodiment below.

### (Outline of embodiment)

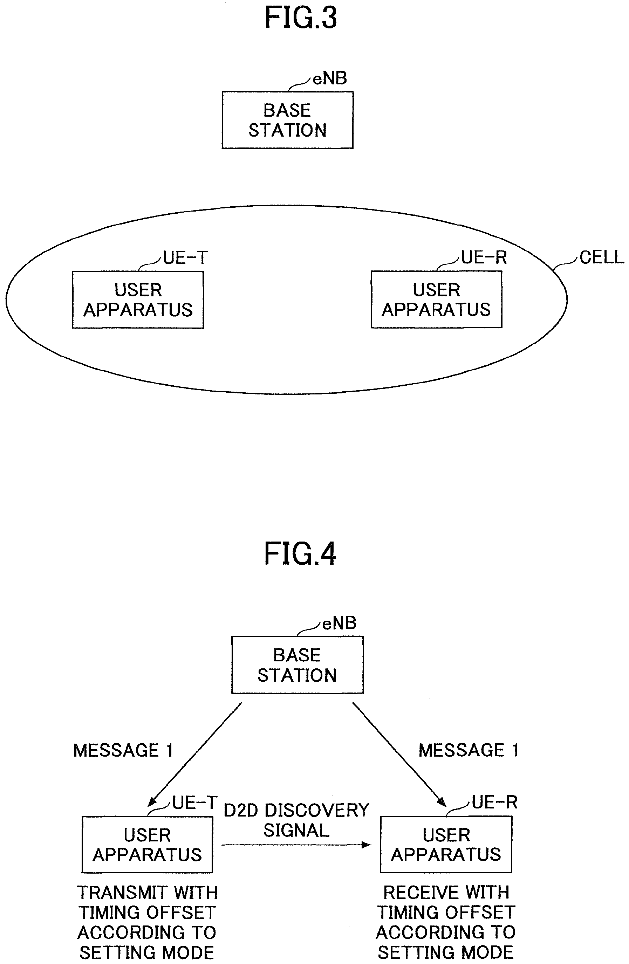

First, with reference to Fig. 3, a configuration example of a communication system in an embodiment of the present invention is described. As shown in Fig. 3, the communication system of the present embodiment is a cellular communication system in which a plurality of user apparatuses UE exist under the base station eNB. However, the user apparatus UE of the present embodiment may not exist in a coverage of the base station eNB, and also even in such a case D2D communication can be performed.

Although there are a plurality of base stations eNB and many user apparatuses UE in the communication system in the present embodiment, Fig. 3 shows, from among them, one base station eNB, and two user apparatuses UE-T and UE-R of a transmission side and a reception side of a discovery signal. The communication system of the present embodiment complies with LTE. However, the communication system that the present invention can be applied is not limited to LTE. In the specification and the claims, the term "LTE" is used to widely mean not only a communication scheme corresponding to 3GPP release 8 or 9, but also a communication scheme corresponding to 3GPP release 10, 11, 12, 13 or later release.

In the present embodiment, a guard band can be inserted between a WAN resource and a discovery resource in order to prevent (mitigate) interference of a discovery signal against a WAN signal (example: PUCCH) in the same subframe. That is, when the base station eNB assigns a discovery resource, the base station eNB keeps several RBs (resource blocks) per one frame for a guard band. Bandwidth and the like of the guard band can be determined by the base station eNB based on communication quality, congestion degree and the like, for example. The guard band can be inserted not only between a discovery resource and a WAN resource but also between a type 1 discovery resource and a type 2 discovery resource in the same subframe.

Hereinafter, although description is given taking a PUCCH as an example of a WAN signal, other WAN signals may be designated, not being limited to the PUCCH. When a guard band is inserted, the PUCCH may have a CP length different from that of D2D signals.

In the present embodiment, the base station eNB determines a setting mode on a transmission timing offset (T2) based on a method of multiplexing (setting content) between a WAN resource and a discovery resource including a guard band setting method, and the like, and the base station eNB notifies the user apparatus UE of it by an RRC signaling, SIB and the like. The notification may be performed together with assignment information of a discovery resource.

Outline of operation of a communication system in the present embodiment is described with reference to Fig. 4. As shown in Fig. 4, the base station eNB determines, for each user apparatus UE, a setting mode (T2 is designated) based on guard band setting of a discovery resource and/or a multiplexing method of a discovery resource and a WAN resource, and the like, and transmits a message 1 including the setting mode to each user apparatus UE. The message 1 may include scheduling information such as assignment information of a discovery resource in addition to the setting mode.

The message 1 may be transmitted by a dynamic signaling such as a PDCCH when resource assignment is performed dynamically like in the type 2A, and the message 1 may be transmitted by SIB or an RRC signaling when resource assignment is performed semi-persistently like in the type 2B.

The user apparatus UE-T that receives the message 1 transmits a discovery signal at a timing of T1-T2 using T2 based on the setting mode included in the message 1. On the other hand, the user apparatus UE-R performs operation of receiving a discovery signal using T2 based on the setting mode included in the message 1, for example.

Also, the base station eNB can implicitly notify of the value of T2 according to a configuration (assignment method) of a discovery resource to assign. That is, in this case, instead of notifying the user apparatus UE of the setting mode by the base station eNB, the user apparatus UE determines a value of T2 according to a configuration (guard band setting, multiplexing method and the like) of a discovery resource assigned from the base station eNB. In this case, resource assignment information can be considered to be "transmission timing information".

Also, in a case of the above-mentioned implicit notification, the user apparatus UE may determine the value of T2 according to a size of a guard band between the discovery resource and a PUCCH. For example, when the guard band is equal to or greater than 2PRBs, T2 may be determined as T2=0, and in other cases, T2 may be determined as T2=TA. Such a determination method may be applied also to the base station eNB.

### (Guard band setting examples)

In uplink communication of LTE, a PUCCH is assigned at both ends of a system band, and a resource between PUCCHs of the both ends is assigned to a data channel (PUSCH). In the present embodiment, it is assumed that a part of the resource of the data channel is assigned as a discovery resource.

In such an assumption, in the present embodiment, two types (guard band setting 1, guard band setting 2) are used as setting methods of a guard band between a discovery resource and a WAN resource and the like.

In the guard band setting 1, a guard band is inserted only at both ends of a discovery resource of the type 1, and a guard band is not inserted between a discovery resource of the type 2 and a WAN resource. In the guard band setting 2, a discovery resource of the type 1 and a discovery resource of the type 2 are treated together so that a guard band is inserted at both ends of these resources. Also, as a multiplexing method between resources, there are FDM in which multiplexing is performed in the frequency direction and TDM in which multiplexing is performed in the time direction.

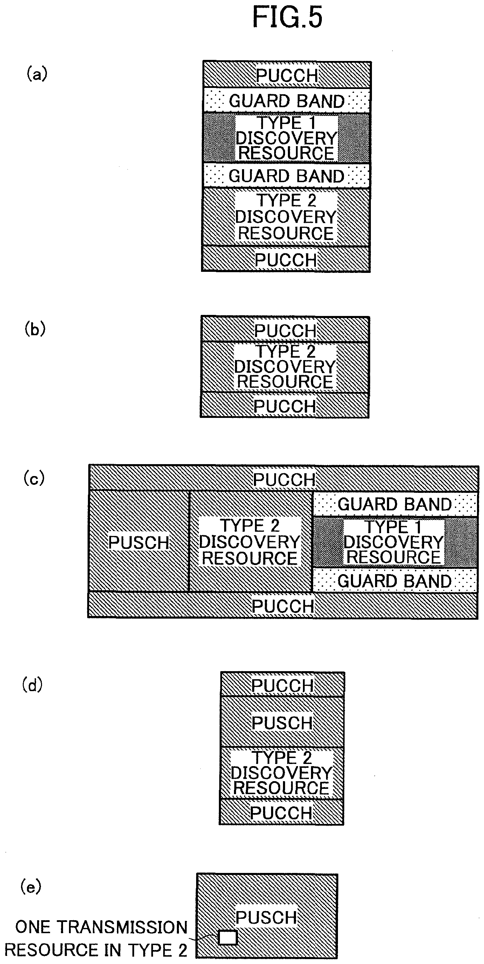

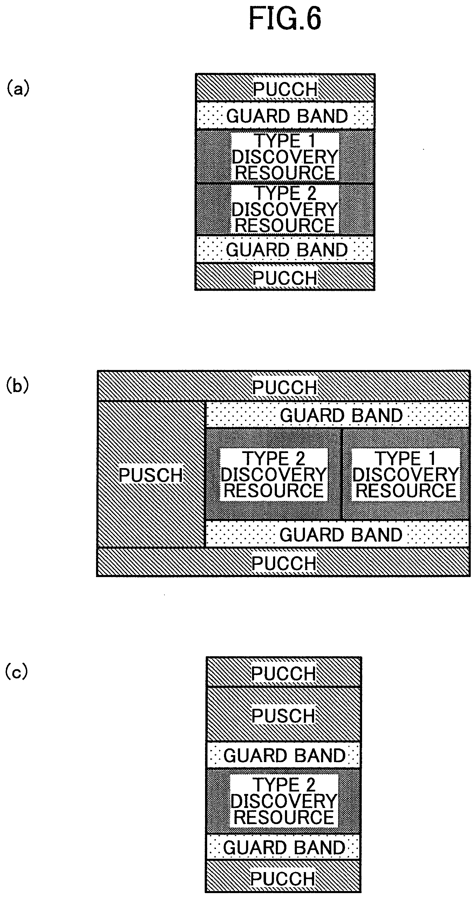

Guard band setting examples are described with reference to Fig. 5 and Fig. 6. Fig. 5 is a diagram showing an example of a guard band setting 1. Fig. 5(a) is an example in which a type 1 discovery resource and a type 2 discovery resource are multiplexed by FDM. Fig. 5(b) is an example in which only type 2 discovery resource is multiplexed with a WAN resource by FDM in which guard band is not inserted.

Fig. 5(c) is an example in which a type 2 discovery resource and a type 1 discovery resource are multiplexed by TDM, and the type 2 discovery resource is multiplexed with a PUSCH by TDM. In Fig. 5(d), it can be considered that a type 2 discovery resource and a type 1 discovery resource are multiplexed by TDM. Also, a type 2 discovery resource is multiplexed with a PUSCH by FDM. In Fig. 5(e), a type 2 discovery resource is assigned in the PUSCH. Also, it can be considered that the type 2 discovery resource is multiplexed with the type 1 discovery resource by TDM.

Fig. 6 is a diagram showing an example of the guard band setting 2. Fig. 6(a) is an example in which a type 2 discovery resource and a type 1 discovery resource are multiplexed by FDM. Fig. 6(b) is an example in which a type 2 discovery resource and a type 1 discovery resource are multiplexed by TDM, and the type 2 discovery resource is multiplexed with a PUSCH by TDM. In Fig. 6(c), it can be considered that a type 2 discovery resource and a type 1 discovery resource are multiplexed by TDM. Also, the type 2 discovery resource is multiplexed with a PUSCH by FDM.

In the guard band setting 2, in each subframe having a PUCCH, a factor for determining T2 is a multiplexing method between the type 2 discovery resource and the type 1 discovery resource (it does not depend on a multiplexing method between the type 2 discovery resource and the PUSCH).

### (Example of setting mode)

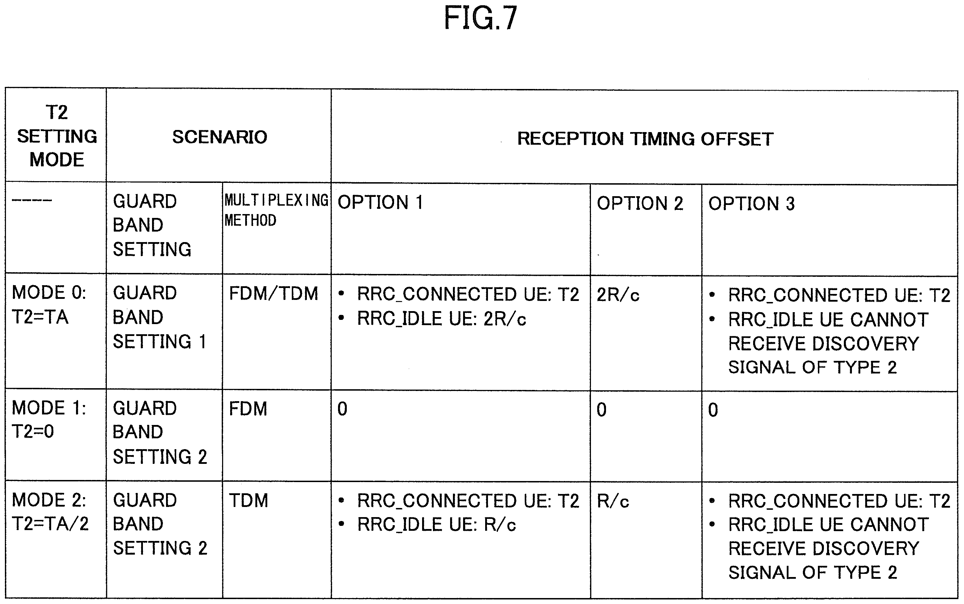

Fig. 7 shows, taking FDD as an example, setting modes of T2, guard band setting and multiplexing methods corresponding to them, and options of reception timing offsets. By the way, the examples shown in Fig. 7 are merely examples. The base station eNB determines a setting mode (value of T2) based on the correspondence relationship shown in Fig. 7. The multiplexing methods shown in Fig. 7 indicates multiplexing methods between a type 1 discovery resource and a type 2 discovery resource. Although Fig. 7 is an example of FDD, in the case of TDD, a predetermined value (example: 624Ts) may be added to the value of T2 in Fig. 7.

For example, when the guard band setting is 1 (example: Fig. 5), it is determined to apply T2=TA irrespective of the multiplexing method. In the present example, this is defined as a setting mode 0, so that the base station eNB transmits 0 as a setting mode. In the present embodiment, the setting mode can be notified by two bits. The user apparatus UE that receives the setting mode determines to apply T2=TA and performs transmission of a discovery signal. In the guard band setting 1, since a guard band is not inserted between the type 2 discovery resource and a WAN resource, interference for a WAN signal can be mitigated by applying T2=TA (same as that of uplink signal transmission in WAN).

Also, in the example of Fig. 7, when the guard band setting is 2 and the multiplexing method is FDM, T2=0 (setting mode 1) is applied. By applying T2=0, although a timing difference occurs between a discovery signal and a WAN signal, interference against the WAN signal can be mitigated since a guard band is inserted. By applying T2=0, common setting with T2(=0) in the type 1 that is currently discussed can be realized.

Also, when the guard band setting is 2 and the multiplexing method is TDM, T2=TA/2 (setting mode 2) is applied. By applying T2=TA/2, reduction of a timing difference in TDM can be expected.

Also, Fig. 7 shows reception timing offsets. For example, as shown in Fig. 7, the user apparatus UE-R that receives a setting mode can start reception operation at a timing (T1-T2) in which a reception timing offset corresponding to the setting mode is considered. However, it is merely an example to use the reception timing offset of the correspondence relationship of Fig. 7, and a reception timing offset determined by another method may be used.

As reception timing offsets, Fig. 7 shows three options. In option 1, the type 2 (type 2B, more specifically) reception is allowed for both of an RRC connected UE and an RRC idle UE, and, since the RRC idle UE does not have TA, the RRC idle UE uses a fixed offset (2R/c or R/c). The RRC connected UE uses T2. By the way, R indicates a radius of the connected cell.

In option 2, the type 2 (type 2B, more specifically) reception is allowed for both of an RRC connected UE and an RRC idle UE, and, each of the RRC idle UE and the RRC connected UE uses a fixed offset (2R/c or R/c). In option 3, the type 2 (type 2B, more specifically) reception is not allowed for the RRC idle UE, and the RRC connected UE uses T2. A discovery signal that a UE can receive may be restricted according to a state as mentioned above, or operation may depend on implementation of the terminal without providing restriction.

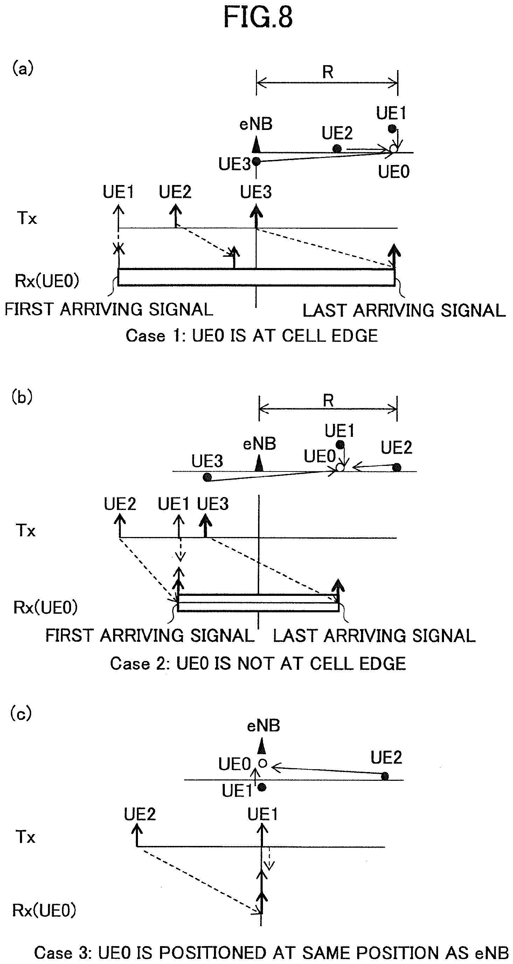

In the above, examples have been shown in which T2 is determined as TA, 0 or TA/2. In the following, as operation examples, in each case, it is described at what timing a discovery signal is received in the reception side, with reference to Figs. 8-10. In Figs. 8-10, it is assumed that, a maximum range for discovery is R, UE0 is a UE in the reception side, UE1 is near UE0, and that UE3 is located at a distance R from UE0. Also, the horizontal axes of Tx and Rx in the figure are time axes indicating transmission timing and reception timing.

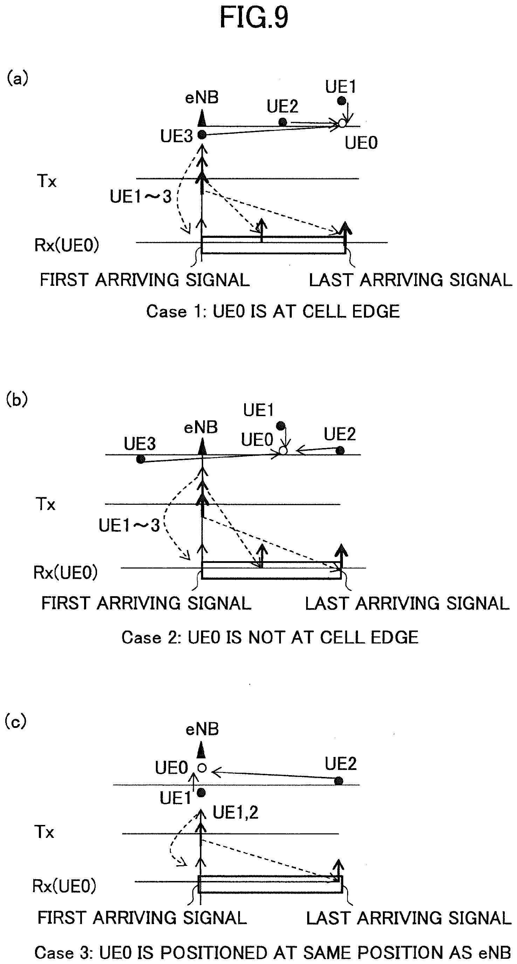

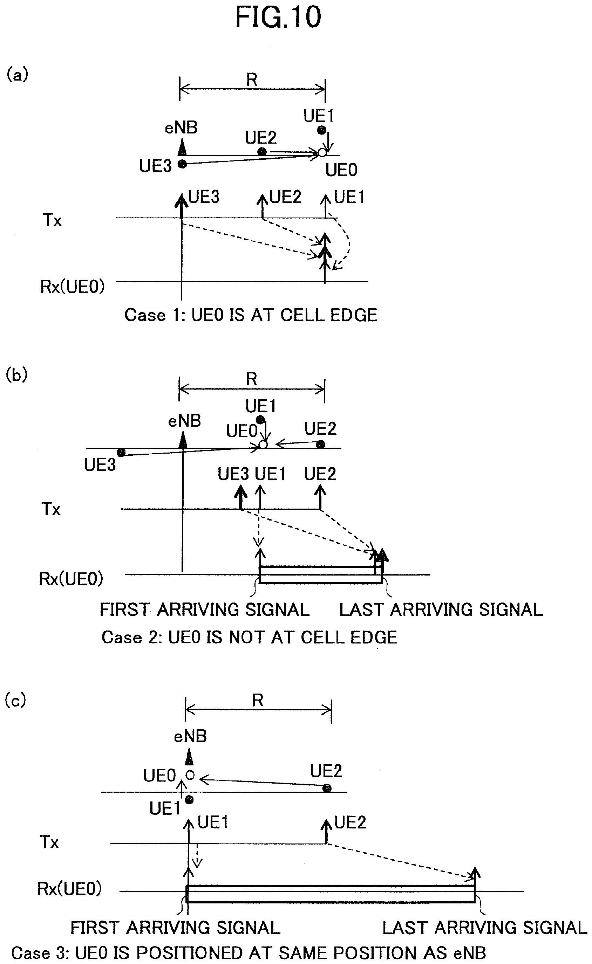

Fig. 8 is a diagram showing a case of T2=TA. Fig. 8(a) is a case where UE0 is located at a cell edge, and Fig. 8(b) is a case where UE0 is not at the cell edge, and Fig. 8(c) is a case where UE0 is located at a position the same as that of the base station eNB. Same applies to (a), (b) and (c) of Fig. 9 and Fig. 10.

For example, in Fig. 8(a), since UE1 is far apart from the base station eNB, TA is greater than that of UE2, so that UE1 transmits a discovery signal at earlier timing than UE2. This discovery signal arrives at UE0 soon. Also, a discovery signal transmitted from UE3 (TA is small since it is close to the base station) arrives at UE0 last.

According to Fig. 8(a)~(c), it is shown that, in the case of T2=TA, UE0 can start reception from the timing offset of the UE0. Fig. 9 shows a case of T2=TA/2. Also, in this case, it is shown that UE0 can start reception from the timing offset T2 of the UE0. Also, it is shown that the reception timing difference is small. Fig. 10 shows a case of T2=0. In this case, it is shown that UE0 can start reception from a DL reception timing of UE0.

### (Operation and configuration of the apparatus)

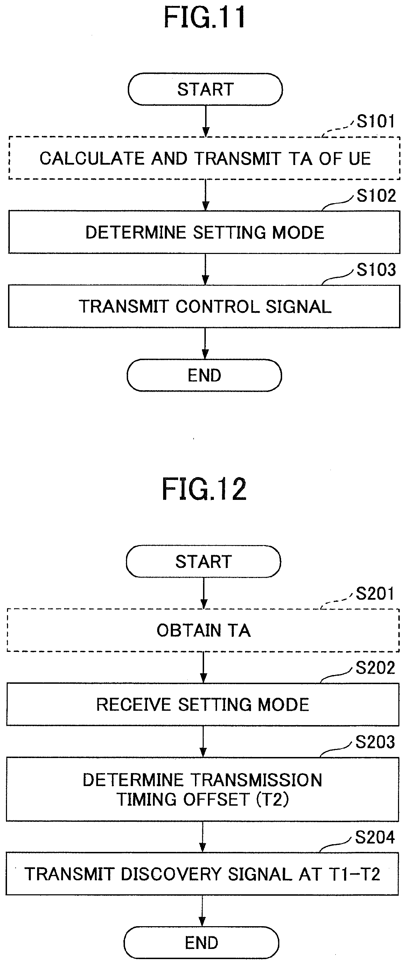

Fig. 11 is a flowchart showing process content of the base station eNB that performs message transmission and the like as shown in Fig. 4. An operation example of the base station eNB is described with reference to Fig. 11.

The base station eNB calculates TA of each user apparatus UE and transmits the calculated TA to each user apparatus UE (step 101). Also, the base station eNB determines a setting mode of each user apparatus UE according to the correspondence table shown in Fig. 7, for example (step 102), and transmits a control signal including the setting mode to each user apparatus UE (step 103).

Fig. 12 is a flowchart showing an operation example of the user apparatus UE-T in the transmission side. An operation example of the user apparatus UE-T is described with reference to Fig. 12.

The user apparatus UE-T obtains TA from the base station eNB (step 201). The user apparatus UE-T receives a setting mode from the base station eNB (step 202), determines a transmission timing offset (step 203), and transmits a discovery signal at a timing of T1-T2 (step 204).

In Fig. 12, it is assumed that the user apparatus UE-T is in an RRC connected state, and transmits a discovery signal based on an active TA. When the user apparatus UE-T is in an RRC idle state and performs discovery signal transmission, a fixed value (R/c and the like) can be used as T2, for example.

Also, in a case where the user apparatus UE-T is in an RRC connected state, and when T2=TA or TA/2, the user apparatus UE-T may perform operation in which, the user apparatus UE-T determines whether a valid TA is held based on a TA timer, and when the valid TA is held, the user apparatus UE-T transmits a discovery signal by applying T2=TA or TA/2, and when the TA timer has expired so that the valid TA is not held, the user apparatus UE-T transmits a discovery signal by applying TA=0. Also, when the user apparatus UE-T does not hold a valid TA, the user apparatus UE-T may perform operation of transmitting a discovery signal of type 1 without transmitting a discovery signal of type 2 or transmitting a RACH

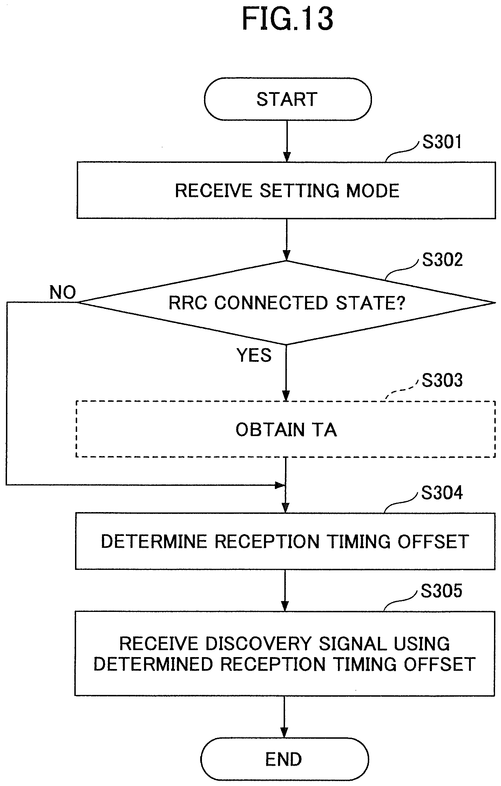

Fig. 13 is a flowchart showing an operation example of a user apparatus UE-R of the reception side. An operation example of the user apparatus UE-R is described with reference to Fig. 13.

The user apparatus UE-R receives a setting mode from the base station eNB (step 301). When the user apparatus UE-R is in an RRC connected state (Yes in step 302), the user apparatus UE-R obtains TA (step 303), and the process goes to step 304. When the user apparatus is not in an RRC connected state (No in step 302), the process goes to step 304 as it is.

The user apparatus UE-R determines a reception timing offset according to the correspondence table shown in Fig. 7, for example (step 304), and performs reception based on the determined reception timing offset. For example, when the reception timing offset is OFFSET, the user apparatus UE-R starts reception operation (demodulation operation and the like for a predetermined range of resources) from a timing of T1-OFFSET (step 305).

Also, the base station eNB may notify the user apparatus UE-R of reception information of the user apparatus UE-R by an upper layer signaling such as SIB or by PDCCH. The reception information is, for example, a reception window width (period during which to monitor a reception signal), a reception timing reference (reception timing offset) and the like.

The reception timing offset may be implicitly notified according to a configuration of an assigned discovery resource, a value of transmission timing offset, or a resource configuration for reception, or the like. That is, for example, based on the correspondence table of Fig. 7, the user apparatus UE-R can determine a reception timing offset corresponding to the configuration of the discovery resource, a value of the transmission timing offset and the like.

Also, the user apparatus UE-R may restrict discovery signals for monitoring according to the RRC state and/or reception timing or the like. For example, when the user apparatus UE-R is in an RRC idle state, the user apparatus UE-R may perform operation for receiving only a discovery resource of type 1 without receiving a discovery signal of a resource of the type 2. Also, the base station eNB may notify the user apparatus UE of a type of the discovery signal that the user apparatus UE monitors by an upper layer signaling such as RRC so that the user apparatus UE may perform reception according to the notification.

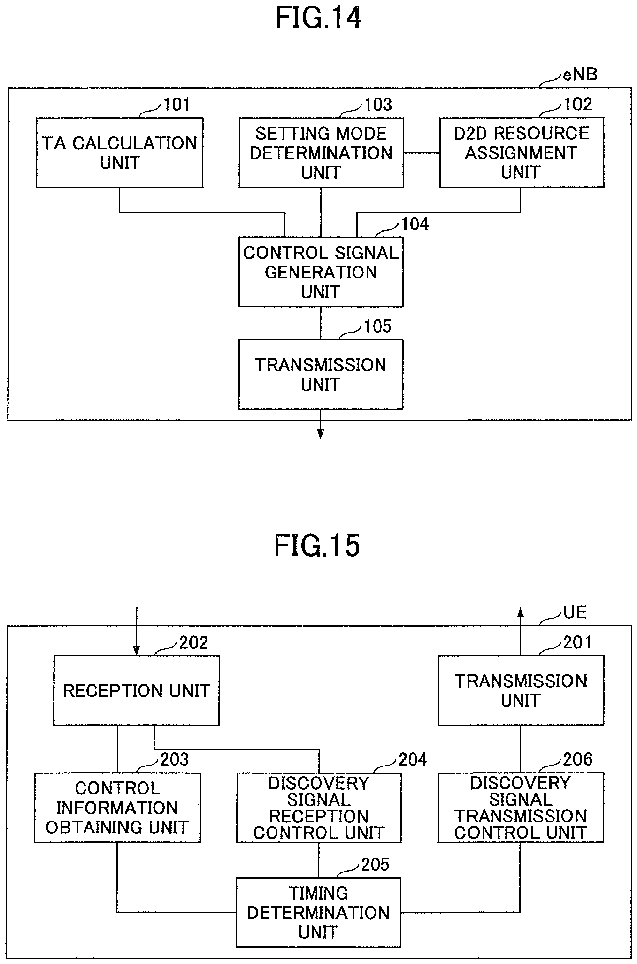

Next, a configuration example of the base station eNB and the user apparatus UE is described with reference to Fig. 14 and Fig. 15.

Fig. 14 is a diagram showing a configuration example of the base station eNB. A configuration example of the base station eNB is described with reference to Fig. 14. Fig. 14 only shows a configuration related to the present embodiment, and the base station eNB also includes existing functions, not shown in the figure, for performing operation as a base station eNB complying with LTE.

As shown in Fig. 14, the base station eNB includes a TA calculation unit 101, a D2D resource assignment unit 102, a setting mode determination unit 103, a control signal generation unit 104 and a transmission unit 105.

The TA calculation unit 101 calculates TA for each user apparatus UE connected to the base station eNB, and passes the TA to the control signal generation unit 104. The D2D resource assignment unit 102 assigns a resource for discovery signal transmission to the user apparatus UE, and passes assignment information (including setting information of a guard band) to the control signal generation unit 104. By the way, although the method for resource assignment is not limited to a specific method, for example, operation may be performed to select between assigning individual resources (type2) and assigning common resource to a group (type 1) according to congestion degree of user apparatuses UE that perform D2D communication.

Also, the D2D resource assignment unit 102 holds, in a memory and the like, resource assignment information including assignment information of a resource assigned to each user apparatus UE, so that the assignment information is referred to by the setting mode determination unit 103.

The setting mode determination unit 103 holds a table, as shown in Fig. 7, for example, that associates a setting mode (T2) with guard band setting information and a multiplexing method, determines a setting mode of each user apparatus UE based on the table and the resource assignment information, and passes the determined setting mode to the control signal generation unit 104.

The control signal generation unit 104 generates various control signals (RRC signaling, SIB, PDCCH and the like), and passes them to the transmission unit 105. The transmission unit 105 transmits a control signal to each user apparatus UE by radio. Also, as described before, the control signal generation unit 104 may be provided with a function for generating a control signal including information on reception, and transmiting the control signal from the transmission unit 105.

Fig. 15 is a diagram showing a configuration example of a user apparatus UE. A configuration example of the user apparatus UE is described with reference to Fig. 15. Fig. 15 only shows a configuration related to the present embodiment, and the user apparatus UE also includes existing functions, not shown in the figure, for performing operation as a user apparatus UE complying with LTE, for example.

As shown in Fig. 15, the user apparatus UE includes a transmission unit 201, a reception unit 202, a control information obtaining unit 203, a discovery signal reception control unit 204, a timing determination unit 205, and a discovery signal transmission control unit 206.

The reception unit 202 receives various signals, by radio, transmitted from the base station eNB or other user apparatuses UE. The control information obtaining unit 203 obtains control information such as a synchronization timing, TA, setting mode, assignment information and the like from the control signal received by the reception unit 202. The timing determination unit 205 determines a transmission timing offset (T2) based on control information obtained by the control information obtaining unit 203, and calculates T1-T2 so as to pass T1-T2 to the discovery signal transmission control unit 206. The discovery signal transmission control unit 206 generates a discovery signal, and controls the transmission unit 201 so as to transmit the discovery signal by radio at a timing of T1-T2. The transmission unit 201 transmits various signals such as a discovery signal by radio.

Also, the timing determination unit 205 determines a reception timing based on control information obtained from the control information obtaining unit 203, and passes information of the reception timing to the discovery signal reception control unit 204. The discovery signal reception control unit 204 controls the reception unit 202 so as to perform reception operation of a discovery signal according to the reception timing information.

### (Summary of embodiment, effect, and the like)

As described above, according to the present embodiment, there is provided a base station configured to transmit a control signal to a user apparatus that performs transmission of a discovery signal by radio, including:
resource assignment means configured to assign, to the user apparatus, a discovery resource to be used for performing transmission of a discovery signal;
determination means configured to determine transmission timing information to be used for the user apparatus to transmit a discovery signal based on an assignment method of the discovery resource; and
transmission means configured to transmit the transmission timing information to the user apparatus.

The resource assignment means is provided with a function for setting a guard band between a resource used for cellular communication and the discovery resource, and the determination means can be configured to determine the transmission timing information based on a setting method of the guard band. The transmission timing information is, for example, information indicating an offset for a timing at which the user apparatus receives a synchronization signal.

By configuring the base station as mentioned above, for example, while interference is prevented by a minimum guard band, a reception timing difference between D2D reception signals can be controlled.

Also, according to the present embodiment, there is provided a user apparatus configured to perform transmission of a discovery signal by radio, including:
reception means configured to receive, from a base station, a control signal including transmission timing information to be used for the user apparatus to transmit a discovery signal; and
transmission means configured to transmit a discovery signal by using the transmission timing information obtained from the control signal,
wherein the transmission timing information is information determined based on an assignment method of a discovery resource to be used for performing transmission of a discovery signal.

The transmission timing information is, for example, information indicating an offset for a timing at which the user apparatus receives a synchronization signal. The user apparatus may receive timing advance information from the base station, and use a value obtained from the timing advance information as the transmission timing information.

By configuring the user apparatus as mentioned above, for example, while interference is prevented by a minimum guard band, a reception timing difference between D2D reception signals can be controlled.

According to the present embodiment, it becomes possible to define a proper transmission timing offset according to RRC state, configuration of a resource pool, and the like. Accordingly, the reception timing difference of a D2D signal can be minimized while ISI and ICI between WAN and D2D signals are kept minimum. Also, when WAN traffic is small, frequency use efficiency can be improved by performing FDM of type 1 and type 2 with no guard band without multiplexing a WAN side signal (without considering interference to WAN side). Further, efficient discovery signal detection becomes possible by adjusting reception timing.

The user apparatus described in the present embodiment may include a CPU and a memory and may be realized by executing a program by the CPU (processor), or may be realized by hardware such as hardware circuits including logics of processing described in the present embodiment, or may be configured by coexistence of a program and hardware.

The base station described in the present embodiment may include a CPU and a memory and may be realized by executing a program by the CPU (processor), or may be realized by hardware such as hardware circuits including logics of processing described in the present embodiment, or may be configured by coexistence of a program and hardware.

In the above, each embodiment of the present invention has been explained. However, the disclosed invention is not limited to the embodiment. Those skilled in the art will conceive of various modified examples, corrected examples, alternative examples, substituted examples, and the like. While specific numerical value examples are used to facilitate understanding of the present invention, such numerical values are merely examples, and any appropriate value may be used unless specified otherwise. Classification into each item in the description is not essential in the present invention, and features described in two or more items may be combined and used as necessary. Subject matter described in an item may be applied to subject matter described in another item (provided that they do not contradict).

It is not always true that the boundaries of the functional units or the processing units in the functional block diagram correspond to boundaries of physical components. The operations by the plural functional units may be physically performed by a single component. Alternatively, the operations by the single functional unit may be physically performed by plural components.

For convenience of explanation, the user apparatus UE and the base station eNB have been explained by using functional block diagrams. However, such an apparatus may be implemented in hardware, software, or a combination thereof.

The software that operates according to the present invention (the software executed by a processor provided in the user apparatus UE, the software executed by a processor provided in the base station eNB) may be stored in any proper storage medium such as a Random Access Memory (RAM), a flash memory, a Read Only Memory (ROM), an EPROM, an EEPROM, a register, a hard disk (HDD), a removable disk, a CD-ROM, a database, a server and the like.

The present invention is not limited to the above-mentioned embodiment and is intended to include various variations, modifications, alterations, substitutions and so on without departing from the spirit of the present invention.

The present international patent application claims priority based on Japanese patent application No. 2014-059263, filed in the JPO on March 20, 2014, and the entire contents of the Japanese patent application No. 2014-059263 are incorporated herein by reference.

### DESCRIPTION OF REFERENCE SIGNS

- UE: user apparatus
- eNB: base station
- 101: TA calculation unit
- 102: D2D resource assignment unit
- 103: setting mode determination unit
- 104: control signal generation unit
- 105: transmission unit
- 201: transmission unit
- 202: reception unit
- 203: control information obtaining unit
- 204: discovery signal reception control unit
- 205: timing determination unit
- 206: discovery signal transmission control unit

## Claims

1. A base station configured to transmit a control signal to a user apparatus that performs transmission of a discovery signal by radio, comprising:
resource assignment means configured to assign, to the user apparatus, a discovery resource to be used for performing transmission of a discovery signal;
determination means configured to determine transmission timing information to be used for the user apparatus to transmit a discovery signal based on an assignment method of the discovery resource; and
transmission means configured to transmit the transmission timing information to the user apparatus.

2. The base station as claimed in claim 1, wherein the resource assignment means is provided with a function for setting a guard band between a resource used for cellular communication and the discovery resource, and
the determination means is configured to determine the transmission timing information based on a setting method of the guard band.

3. The base station as claimed in claim 1 or 2, wherein the transmission timing information is information indicating an offset for a timing at which the user apparatus receives a synchronization signal.

4. A user apparatus configured to perform transmission of a discovery signal by radio, comprising:
reception means configured to receive, from a base station, a control signal including transmission timing information to be used for the user apparatus to transmit a discovery signal; and
transmission means configured to transmit a discovery signal by using the transmission timing information obtained from the control signal,
wherein the transmission timing information is information determined based on an assignment method of a discovery resource to be used for performing transmission of a discovery signal.

5. The user apparatus as claimed in claim 4, wherein the transmission timing information is information indicating an offset for a timing at which the user apparatus receives a synchronization signal.

6. The user apparatus as claimed in claim 4 or 5, wherein the user apparatus receives timing advance information from the base station, and uses a value obtained from the timing advance information as the transmission timing information.

7. A transmission timing information transmission method executed by a base station configured to transmit a control signal to a user apparatus that performs transmission of a discovery signal by radio, comprising:
a resource assignment step of assigning, to the user apparatus, a discovery resource to be used for performing transmission of a discovery signal;
a determination step of determining transmission timing information to be used for the user apparatus to transmit a discovery signal based on an assignment method of the discovery resource; and
a transmission step of transmitting the transmission timing information to the user apparatus.

8. A discovery signal transmission method executed by a user apparatus configured to perform transmission of a discovery signal by radio, comprising:
a reception step of receiving, from a base station, a control signal including transmission timing information to be used for the user apparatus to transmit a discovery signal; and
a transmission step of transmitting a discovery signal by using the transmission timing information obtained from the control signal,
wherein the transmission timing information is information determined based on an assignment method of a discovery resource to be used for performing transmission of a discovery signal.
